# EUROPÄISCHE PATENTANMELDUNG

(11) **EP 2 523 158 A1**
(43) Veröffentlichungstag der Anmeldung: **14.11.2012**
(21) Anmeldenummer: 12001222.4
(22) Anmeldetag: 23.02.2012
(51) Int. Cl.: G06Q 40/00

(54) **Datenspeichervorrichtung zur Speicherung von Fiskaldaten**

(30) Priorität: 06.05.2011 DE 102011050174
(71) Anmelder: Wincor Nixdorf International GmbH, 33106 Paderborn (DE)
(72) Erfinder: Hoffmann, Stefan, 13505 Berlin (DE); Schulz, Stefan, 13187 Berlin (DE); Szilleweit, Sandro, 14473 Potsdam (DE); Winge, Sascha, 14476 Potsdam (DE)

(57) **Zusammenfassung**

Die Erfindung betrifft eine Datenspeichervorrichtung zur Speicherung von Fiskaldaten mit einer elektronischen Verarbeitungseinheit und einem die Fiskaldaten speichernden nicht flüchtigen Fiskalspeicher, wobei die Fiskaldaten vermittels der elektronischen Verarbeitungseinheit in den nicht flüchtigen Speicher einlesbar sind, und mit einer Schnittstelle zur Kommunikation mit einer weiteren Baueinheit, wobei die elektronische Verarbeitungseinheit als ein Mikrocontroller ausgebildet ist, der einen Programmspeicher zur Speicherung eines Fiskaldatenbetriebsprogramms derart aufweist, und dass Speicherzellen des Fiskalspeichers nicht löschbar und/oder nicht wiederbeschreibbar sind.

## Beschreibung

Die Erfindung betrifft eine Datenspeichervorrichtung zur Speicherung von Fiskaldaten mit einer elektronischen Verarbeitungseinheit und einem die Fiskaldaten speichernden nicht flüchtigen Fiskalspeicher, wobei die Fiskaldaten vermittels der elektronischen Verarbeitungseinheit in den nicht flüchtigen Speicher einlesbar sind, und mit einer Schnittstelle zur Kommunikation mit einer weiteren Baueinheit.

Moderne Kassensysteme bestehen häufig aus einem computergesteuerten System mit einem externen Drucker, der universell einsetzbar ist und der den Kaufbeleg (Bon) für den Kunden ausdruckt. Sofern Steuerbehörden eine Kontrolle der Abrechnung verlangen, sind in den Druckern entsprechende Druckwerke integriert, die neben dem Bondruck auch den Druck eines inhaltlich identischen Journals ermöglichen. Durch Ausdruck eines Journals können gemeldete Umsätze mit den tatsächlichen Umsätzen verglichen werden. Zur Bereitstellung des Journals ist gemäß EP 0 787 331 B1 eine Datenspeichervorrichtung mit einer elektronischen Verarbeitungseinheit und einem nicht flüchtigen Fiskalspeicher bekannt, wobei in dem Fiskalspeicher entsprechende Journaldaten als Fiskaldaten abgespeichert sind. Die bekannte elektronische Verarbeitungseinheit ist als ein Mikroprozessorkern (Central Processing Unit, CPU) ausgebildet, die mit einem EAROM-Speicher als Fiskalspeicher zusammenarbeitet. Nachteilig an der bekannten Datenspeichervorrichtung ist, dass sie relativ aufwendig ist.

Aufgabe der vorliegenden Erfindung ist es daher, eine Datenspeichervorrichtung zur Speicherung von Fiskaldaten derart weiterzubilden, dass ein kompakterer Aufbau gewährleistet ist und insbesondere eine sichere Speicherung von Fiskaldaten gewährleistet ist.

Zur Lösung dieser Aufgabe ist die Erfindung in Verbindung mit dem Oberbegriff des Patentanspruchs 1 dadurch gekennzeichnet, dass die elektronische Verarbeitungseinheit als ein Mikrocontroller ausgebildet ist, der einen Programmspeicher zur Speicherung eines Fiskaldatenbetriebsprogramms derart aufweist, und dass Speicherzellen des Fiskalspeichers nicht löschbar und/oder nicht wiederbeschreibbar sind.

Der besondere Vorteil der Erfindung besteht darin, dass die Ansteuerung eines Fiskalspeichers mittels eines Mikrocontrollers über ein Fiskaldatenbetriebsprogramm sicher und zuverlässig gestaltet werden kann. Durch entsprechende Programmierung des Mikrocontrollers kann der Fiskalspeicher die für die steuerliche Überprüfung erforderlichen Anforderungen auf einfache Weise erfüllen. Speicherzellen des Fiskalspeichers können so angesteuert werden, dass sie weder löschbar noch wiederbeschreibbar sind. Einmal in dem Fiskalspeicher abgespeicherte Fiskaldaten verbleiben in demselben. Die Speicherzellen des Fiskalspeichers sind lediglich über eine einmalige Schreiboperation sowie über mehrmalige Leseoperationen ansteuerbar.

Nach einer bevorzugten Ausführungsform der Erfindung sind der Mikrocontroller und der Fiskalspeicher in einem gemeinsamen Mini-Gehäuse eingegossen. Vorzugsweise ist das Mini-Gehäuse als eine ausgehärtete Vergussmasse ausgebildet. Die Datenspeichervorrichtung bildet somit eine manipulationssichere Einheit, die nicht ohne Zerstörung von beispielsweise einem Fiskaldrucker getrennt werden kann.

Nach einer Weiterbildung der Erfindung ist der Fiskalspeicher als ein Flash-Speicher ausgebildet. Das Fiskaldatenbetriebsprogramm ist in einem als Flash-Speicher ausgebildeten Programmspeicher des Mikrocontrollers abgespeichert. Der Fiskalspeicher und der Mikrocontroller weisen einen kompakten Aufbau auf und sind vorzugsweise auf einer gemeinsamen Platine angeordnet. Die Manipulationssicherheit wird weiter dadurch erhöht, dass das Fiskaldatenbetriebsprogramm nicht veränderbar ist. Vorzugsweise ist der Programmspeicher fest verdrahtet.

Nach einer Weiterbildung der Erfindung ist der Fiskalspeicher derart ausgebildet, dass die Fiskaldaten redundant in mehreren Speicherzellen des Fiskalspeichers abgespeichert werden können. Hierdurch erfolgt eine sichere und zuverlässige Abspeicherung der Fiskaldaten.

Nach einer Weiterbildung der Erfindung ist ein Speicherkorrektur-Modul vorgesehen zur Erkennung und Korrigierung von Datenfehlern in dem Fiskalspeicher. Hierbei kann ein sogenannter ECC-Algorithmus zur Anwendung kommen, der redundante Informationen erzeugt, um die Datenfehler zu erkennen und korrigieren zu können.

Weitere Vorteile der Erfindung ergeben sich aus den weiteren Unteransprüchen.

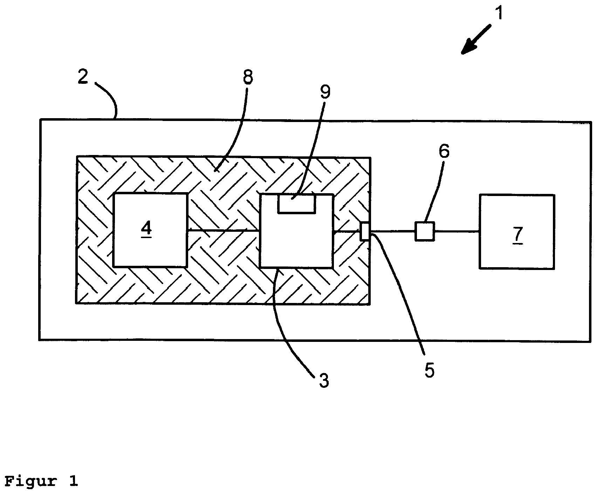

Ein Ausführungsbeispiel der Erfindung wird nachfolgend anhand der Figur näher erläutert.

Die Figur zeigt:
- Figur: ein Blockschaltbild einer erfindungsgemäßen Datenspeichervorrichtung.

Eine Datenspeichervorrichtung 1 zur Speicherung von Fiskaldaten ist in einem Fiskaldrucker 2 integriert angeordnet, der beispielsweise Bestandteil eines Kassensystems ist. Der Fiskaldrucker 2 weist nicht dargestellte Betriebsmittel auf, damit in der Datenspeichervorrichtung 1 abgespeicherte Fiskaldaten ausgedruckt werden können. Die Fiskaldaten beinhalten alle für ein Journal erforderlichen Informationen, beispielsweise die im Kassensystem zu einem bestimmten Datum abgerechneten Kaufpreisbeträge für bestimmte Waren. Die erfindungsgemäße Datenspeichervorrichtung kann überall dort eingesetzt werden, wo steuerlich relevante Daten abgespeichert werden sollen und gegebenenfalls im Rahmen einer Steuerprüfung abrufbar sein müssen.

Die Datenspeichervorrichtung 1 besteht im Wesentlichen aus einer als ein Mikrokontroller 3 ausgebildeten elektronischen Verarbeitungseinheit und einem die Fiskaldaten speichernden nicht flüchtigen Fiskalspeicher 4, der als ein Flash-Speicher ausgebildet ist. Der Mikrocontroller 3 ist über eine vorzugsweise serielle Schnittstelle 5 und über einen Verbindungsstecker 6 mit einem Fiskalcontroller 7 (weitere Baueinheit) verbunden, mittels dessen der Fiskaldrucker 2 angesteuert wird.

Der Mikrocontroller 3 und der Fiskalspeicher 4 sind in einem gemeinsamen Mini-Gehäuse 8 eingegossen, insbesondere in einer ausgehärteten Vergussmasse 8 eingebettet. Die Vergussmasse 8 ist an einer nicht dargestellten Wandung des Fiskaldruckers 2 so angeformt, dass die Datenspeichervorrichtung 1 nicht ohne Zerstörung von der Wandung des Fiskaldruckers 2 getrennt werden kann.

Der Fiskalspeicher 4 und der Mikrocontroller 3 sind auf einer gemeinsamen Platine in Form eines einzelnen Chips angeordnet. Die Datenspeichervorrichtung 1 ist lediglich mit einer einzigen Programmierspannung betreibbar.

Der Mikrocontroller 3 weist einen Programmspeicher 9 (Festwertspeicher) auf, in dem ein Fiskaldatenbetriebsprogramm vorzugsweise fest verdrahtet implementiert ist. Das Fiskaldatenbetriebsprogramm ist derart ausgestaltet, dass die Speicherzellen des Fiskalspeichers 4 nicht löschbar und nicht wiederbeschreibbar sind. Es sind lediglich eine einmalige Schreiboperation und eine mehrmalige Leseoperation möglich. Der Programmspeicher 9 des Mikrocontrollers 3 ist ebenfalls als ein Flash-Speicher ausgebildet.

Der Mikrocontroller 3 umfasst ein Speicherkorrektur-Modul, mittels dessen Datenfehler in dem Fiskalspeicher 4 erkannt und korrigiert werden können. Das Speicherkorrektur-Modul enthält einen ECC-Algorithmus (Error Correction Code), mittels dessen die statistische Bitfehlerrate gesenkt werden kann. Der Fiskalspeicher 4 ist so ausgelegt, dass die gleichen Fiskaldaten mehrfach abgespeichert werden; durch diese mehrfache Abspeicherung wird verhindert, dass aufgrund eines Datenfehlers Fiskaldaten verloren gehen.

Durch Majoritätsabfragen bei Ungleichheit werden eventuell auftretende Speicherfehler unterdrückt. Durch beide Maßnahmen wird die Datensicherheit erhöht.

### Bezugszeichenliste

- 1: Datenspeichervorrichtung
- 2: Fiskaldrucker
- 3: Mikrocontroller
- 4: Fiskalspeicher
- 5: Schnittstelle
- 6: Verbindungsstecker
- 7: Fiskalcontroller
- 8: Mini-Gehäuse
- 9: Flash-Speicher

## Patentansprüche

1. Datenspeichervorrichtung zur Speicherung von Fiskaldaten mit einer elektronischen Verarbeitungseinheit und einem die Fiskaldaten speichernden nicht flüchtigen Fiskalspeicher, wobei die Fiskaldaten vermittels der elektronischen Verarbeitungseinheit in den nicht flüchtigen Speicher einlesbar sind, und mit einer Schnittstelle zur Kommunikation mit einer weiteren Baueinheit, **dadurch gekennzeichnet, dass** die elektronische Verarbeitungseinheit als ein Mikrocontroller (3) ausgebildet ist, der einen Programmspeicher (9) zur Speicherung eines Fiskaldatenbetriebsprogramms derart aufweist, und dass Speicherzellen des Fiskalspeichers (4) nicht löschbar und/oder nicht wiederbeschreibbar sind.

2. Datenspeichervorrichtung nach Anspruch 1, **dadurch gekennzeichnet, dass** der Mikrocontroller (3) und der Fiskalspeicher (4) in einem Mini-Gehäuse (8) eingegossen sind.

3. Datenspeichervorrichtung nach Anspruch 2, **dadurch gekennzeichnet, dass** das Mini-Gehäuse (8) durch eine ausgehärtete Vergussmasse gebildet ist.

4. Datenspeichervorrichtung nach einem der Ansprüche 1 bis 3, **dadurch gekennzeichnet, dass** der Fiskalspeicher (4) als ein Flash-Speicher ist und dass der Programmspeicher (9) des Mikrocontrollers (3) als ein das Fiskaldatenbetriebsprogramm aufnehmender Flash-Speicher ausgebildet sind.

5. Datenspeichervorrichtung nach einem der Ansprüche 1 bis 4, **dadurch gekennzeichnet, dass** das Mini-Gehäuse (8) an einer Wandung eines Fiskaldruckers (2) befestigt ist.

6. Datenspeichervorrichtung nach einem der Ansprüche 1 bis 5, **dadurch gekennzeichnet, dass** der Mikrocontroller (3) über eine serielle Schnittstelle (5) mit der als ein Fiskalcontroller (7) ausgebildeten weiteren Baueinheit verbunden ist.

7. Datenspeichervorrichtung nach einem der Ansprüche 1 bis 6, **dadurch gekennzeichnet, dass** der Fiskalspeicher (4) mittels des Fiskaldatenbetriebsprogramms derart ansteuerbar ist, dass gleiche Fiskaldaten in mindestens zwei Speicherzellen abgespeichert werden.

8. Datenspeichervorrichtung nach einem der Ansprüche 1 bis 7, **dadurch gekennzeichnet, dass** ein Speicherkorrektur-Modul vorgesehen ist zur Erkennung und Korrigierung von Datenfehlern in dem Fiskalspeicher (4).

9. Datenspeichervorrichtung nach einem der Ansprüche 1 bis 8, **dadurch gekennzeichnet, dass** der Fiskalspeicher (4) und der Mikrocontroller (3) auf einer gemeinsamen Platine angeordnet sind.

10. Verwendung einer Datenspeichervorrichtung nach einem der Ansprüche 1 bis 9 für ein Kassensystem.
